# EUROPÄISCHE PATENTANMELDUNG

(11) **EP 4 378 625 A1**
(43) Veröffentlichungstag der Anmeldung: **05.06.2024**
(21) Anmeldenummer: 22210914.2
(22) Anmeldetag: 01.12.2022
(51) Int. Cl.: B24B 31/00, B24B 31/12, B23Q 1/00, B23Q 3/10, B23Q 3/12, B23Q 3/06, B24B 41/06, B24B 45/00, B23Q 3/08, B23B 25/00, B24B 5/44, B24B 31/06

(54) **SPANNVORRICHTUNG UND VORRICHTUNG ZUM GLEITSCHLEIFEN**

(71) Anmelder: IPS - Innovative Produktionssysteme GmbH, 72250 Freudenstadt (DE)
(72) Erfinder: Wälde, Rainer, 72250 Freudenstadt (DE)
(74) Vertreter: Witte, Weller & Partner Patentanwälte mbB

(57) **Zusammenfassung**

Zu einem Spannen eines Fahrzeugrads zum Gleitschleifen schlägt die Erfindung eine Spannvorrichtung (1) mit einem pneumatischen Aktuator (6) vor, der sowohl die Spannvorrichtung (1) mit einem Schaft in einem Arbeitsbehälter einer Vorrichtung zum Gleitscheifen verbindet als auch das Fahrzeugrad gegen ein Auflager im Arbeitsbehälter spannt.

## Beschreibung

Die Erfindung betrifft eine Spannvorrichtung zum Spannen eines Werkstücks mit den Merkmalen des Oberbegriffs des Anspruchs 1 sowie eine Vorrichtung zum Gleitschleifen mit einer solchen Spannvorrichtung.

Die erfindungsgemäße Spannvorrichtung ist insbesondere zu einem Spannen eines Fahrzeugrads eines Kraftfahrzeugs in einem Arbeitsbehälter einer Vorrichtung zum Gleitschleifen des Fahrzeugrads vorgesehen. Eine mögliche andere Verwendung ist ein Spannen eines Fahrzeugrads zu einer anderen Bearbeitung des Fahrzeugrads oder beispielsweise auch zum Spannen eines Fahrzeugrads an einer Vorrichtung zum dynamischen Auswuchten des Fahrzeugrads. Die Erfindung ist nicht auf das Spannen eines Fahrzeugrads beschränkt, sondern lässt sich grundsätzlich zum Spannen eines beliebigen Bauteils mit oder ohne Durchgangsloch verwenden.

Das Patent EP 3 501 733 B1 offenbart eine Vorrichtung zum Gleitschleifen eines Fahrzeugrads mit einem Arbeitsbehälter, in dem das Fahrzeugrad mit einer Spannvorrichtung festgespannt wird. In dem Arbeitsbehälter ist ein Auflager für das Fahrzeugrad angeordnet, von dem ein Schaft absteht. Auf den Schaft ist ein Spannkopf aufsetzbar, der eine Formschlusskupplung mit elektromechanisch betätigten Riegeln zum Verbinden mit dem Schaft aufweist. Zum Spannen wird das Fahrzeugrad mit einer Radnabe auf dem Auflager angeordnet derart, dass der Schaft ein Mittelloch der Radnabe durchgreift. Der Spannkopf wird auf den Schaft aufgesetzt und mit seiner Formschlusskupplung mit dem Schaft verbunden. Der Spannkopf weist ein federbeaufschlagtes Spannstück auf, das die Radnabe gegen das Auflager spannt.

Ein Nachteil des bekannten Spannkopfs ist, dass er mit einer Kraft gegen die Radnabe gedrückt werden muss, die mindestens so groß wie eine Spannkraft ist, mit der das federbeaufschlagte Spannstück des Spannkopfs die Radnabe des Fahrzeugrads zwischen dem Auflager und dem Spannkopf festspannt, damit die Riegel des Spannkopfs betätigt und der Spannkopf mit dem Schaft verbunden werden kann.

Aufgabe der Erfindung ist, eine Spannvorrichtung vorzuschlagen, die mit einem Gegenspannstück verbindbar ist, ohne dass eine Spannkraft aufgebracht werden muss.

Die Aufgabe wird erfindungsgemäß durch eine Spannvorrichtung mit den Merkmalen des Anspruchs 1 gelöst.

Die erfindungsgemäße Spannvorrichtung ist allgemein zum Spannen eines Werkstücks und insbesondere zum Spannen eines Fahrzeugrads eines Kraftfahrzeugs in einem Arbeitsbehälter einer Vorrichtung zum Gleitschleifen des Fahrzeugrads vorgesehen. Andere Verwendungen schließt die Erfindung nicht aus. Beispielsweise lässt sich mit einer erfindungsgemäßen Spannvorrichtung ein Fahrzeugrad zu einer anderen Bearbeitung als durch Gleitschleifen oder beispielsweise auch zum Spannen eines Fahrzeugrads an einer Vorrichtung zum dynamischen Auswuchten des Fahrzeugrads verwenden. Auch lassen sich andere Bauteile als ein Fahrzeugrad mit oder ohne Loch mittels der erfindungsgemäßen Spannvorrichtung festspannen.

Die erfindungsgemäße Spannvorrichtung weist ein Spannstück zum Spannen des Werkstücks, eine lösbare Verbindungseinrichtung zu einem lösbaren Verbinden der Spannvorrichtung mit einem Gegenspannstück und einen Aktuator zur Betätigung der Verbindungseinrichtung auf. Das Spannstück und das Gegenspannstück dienen vergleichbar Backen eines Schraubstocks dem Festspannen des Werkstücks zwischen sich. Zum Festspannen wird das Spannstück in der Spannrichtung auf das Gegenspannstück zu bewegt oder - wenn ein Hohlteil von innen gespannt wird, voneinander entfernt. Das Spannstück ist Bestandteil der erfindungsgemäßen Spannvorrichtung, das Gegenspannstück ist nicht bei allen sondern nur bei einem Teil der Ausführungen der Erfindung Bestandteil der Spannvorrichtung. Ein Aktuator ist eine antriebstechnische Baueinheit, die eine mechanische Bewegung erzeugt. Dabei ist vorgesehen, dass der Aktuator bei einem Schließen der Verbindungseinrichtung das Spannstück in einer Spannrichtung in Bezug zu der Verbindungseinrichtung beaufschlagt. Durch Schließen der Verbindungseinrichtung mittels des Aktuators wird die Spannvorrichtung mit dem Gegenspannstück lösbar verbunden. Ist durch Schließen der Verbindungseinrichtung die Spannvorrichtung mit dem Gegenspannstück verbunden, spannt die Beaufschlagung des Spannstücks mit dem Aktuator in der Spannrichtung das zwischen dem Spannstück und dem Gegenspannstück angeordnetes Werkstück zwischen dem Spannstück und dem Gegenspannstück fest. "Schließen der Verbindungseinrichtung" bedeutet ein lösbares Verbinden des Spannstücks mit dem Gegenspannstück.

Ein Vorteil der Erfindung ist, dass das Spannstück ohne Spannkraft mit dem Gegenspannstück verbunden werden kann und die Spannkraft erst aufgebracht werden muss, wenn das Spannstück mit dem Gegenspannstück verbunden ist. Allerdings schließt die Erfindung nicht aus, dass eine Spannkraft auch schon vor oder während des Schließens der Verbindungseinrichtung aufgebracht wird. Die Spannkraft wird mit dem Aktuator aufgebracht und muss nicht von außen aufgebracht werden.

Weiterer Vorteil der Erfindung ist, dass die Spannkraft mit dem Aktuator für jedes Werkstück individuell einstellbar ist. Die Spannkraft lässt sich an den jeweiligen Verwendungszweck anpassen, also sowohl an das zu spannenden Werkstück als auch an die vorgesehene Bearbeitung. Wirken bei der Bearbeitung hohe Kräfte auf das Werkstück ein, kann das Werkstück mit einer größeren Spannkraft gespannt werden.

Ein zusätzlicher Vorteil der Erfindung ist, dass ein Aktuator sowohl zum Betätigen oder Schließen der Verbindungseinrichtung als auch zum Spannen des Werkstücks genutzt wird.

Eine Ausgestaltung der Erfindung sieht vor, dass die Spannvorrichtung einen Schaft aufweist, mit dem das Spannstück mit Hilfe der Verbindungseinrichtung lösbar verbindbar ist, und dass der Aktuator das Spannstück beim Schließen der Verbindungseinrichtung in einer Längsrichtung des Schafts als Spannrichtung beaufschlagt. Diese Ausgestaltung ist insbesondere für Werkstücke mit einem Loch vorgesehen, die derart auf dem Schaft angeordnet werden können, dass der Schaft das Loch des Werkstücks durchgreift. Beispiel für ein solches Werkstück ist ein Fahrzeugrad eines Kraftwagens, dessen Mittelloch der Schaft zum beziehungsweise beim Spannen durchgreift. Die Spannvorrichtung wird nach dem Werkstück beziehungsweise Fahrzeugrad auf den Schaft aufgesetzt, insbesondere auf ein Ende des Schafts aufgesetzt, lösbar mit dem Schaft verbunden und spannt das Werkstück anschließend fest.

Eine Weiterbildung der Erfindung weist ein Auflager als Gegenspannstück auf, von dem der Schaft absteht, wobei das Werkstück zwischen dem Auflager und dem Spannstück festspannbar ist.

Der Aktuator kann grundsätzlich beliebig wirken, beispielsweise elektromechanisch mit einem Elektromotor, auch mit einem Linearmotor, direkt oder über ein mechanisches Getriebe oder elektromagnetisch. Vorzugsweise ist der Aktuator der erfindungsgemäßen Spannvorrichtung druckmittelbetätigt, das heißt der Aktuator wirkt hydraulisch oder insbesondere pneumatisch.

Der Aktuator kann einfach wirkend oder doppelt wirkend sein. Als einfach wirkender Aktuator öffnet oder schließt der Aktuator die Verbindungseinrichtung und spannt das Werkstück und wird beispielsweise federbeaufschlagt gelöst. Als doppelt wirkender Aktuator öffnet und schließt der Aktuator die Verbindungseinrichtung und spannt und löst das Werkstück.

Eine Ausgestaltung der Erfindung sieht eine Kolben-Zylinder-Einheit als Aktuator oder als Bestandteil eines druckmittelbetätigbaren, hydraulischen oder insbesondere pneumatischen Aktuators vor.

Eine Ausgestaltung der Erfindung sieht einen Riegel als Bestandteil der Verbindungseinrichtung der Spannvorrichtung vor. Als Riegel wird hier ein Bauteil bezeichnet, mit dem die Spannvorrichtung über ihre Verbindungseinrichtung lösbar mit dem Gegenspannstück beziehungsweise dem Schaft verbindbar ist. Insbesondere ist die Verbindung formschlüssig durch Hintergriff des Riegels an einer Hinterschneidung oder dergleichen des Gegenspannstücks oder des Schafts. Zum Verbinden mit dem Gegenspannstück oder dem Schaft wird der Riegel mit einer Schrägfläche quer oder jedenfalls mit einer Komponente quer zur Spannrichtung bewegt. Die Schrägfläche verläuft schräg mit konstantem oder auch veränderlichem Winkel zur Spannrichtung. Die Bewegung des Riegels wird durch eine Bewegung der Schrägfläche in Bezug zum Riegel in der Spannrichtung erzeugt, die vergleichbar einem Keil durch den Verlauf der Schrägfläche schräg zur Spannrichtung den Riegel quer zur Spannrichtung bewegt. Die Bewegung bringt den Riegel beim Schließen der Verbindungseinrichtung beispielsweise in die die Hinterschneidung des Gegenspannstücks oder des Schafts hintergreifende Stellung und/oder beim Öffnen der Verbindungseinrichtung außer Eingriff von der Hinterschneidung. Vorzugsweise bewegt die Schrägfläche den Riegel in die hintergreifende Stellung und der Riegel wird federbeaufschlagt außer Eingriff bewegt oder umgekehrt.

Die Schrägfläche kann beispielsweise eine Pyramidenfläche, insbesondere eine Pyramidenstumpffläche oder eine Kegelfläche, insbesondere eine Kegelstumpffläche sein. Die Pyramide oder der Kegel ist gleichachsig oder achsparallel zur Spannrichtung angeordnet und wird zum Bewegen des Riegels axial bewegt. Die Verbindungseinrichtung kann mehrere, über einen Umfang der Pyramide oder des Kegels angeordnete Riegel aufweisen. Als Riegel kann die Verbindungseinrichtung eine oder mehrere Kugeln aufweisen. Vorzugsweise ist die Schrägfläche eine Innenfläche einer Hohlpyramide, insbesondere eines Hohlpyramidenstumpfs beziehungsweise eine Innenfläche eines Hohlkegels, insbesondere eines Hohlkegelstumpfs.

Die Ausführung der erfindungsgemäßen Spannvorrichtung mit dem Schaft sieht eine an dem Schaft umlaufenden Hinterschneidung für den Hintergriff des oder der Riegel zum formschlüssigen Verbinden der Spannvorrichtung mit dem Schaft vor. Die Hinterschneidung kann beispielsweise eine Nutwange einer umlaufenden Nut im Schaft sein. Der Schaft kann eine umlaufende Nut mit rundem Querschnitt und die Verbindungseinrichtung eine oder vorzugsweise mehrere Kugeln als Riegel aufweisen, die über den Umfang verteilt angeordnet sind. Eine Kegelstumpfinnenfläche beaufschlagt die Kugel/n durch eine Axialbewegung der Kegelstumpfinnenfläche in Bezug auf die Kugel/n radial nach innen in die Nut.

Die erfindungsgemäße Vorrichtung zum Gleitschleifen mit den Merkmalen des Anspruchs 10 weist einen Arbeitsbehälter auf, in dem das Werkstück, beispielsweise das Fahrzeugrad, zu seiner Bearbeitung, das heißt zum Gleitschleifen, mit der vorstehend erläuterten Spannvorrichtung festgespannt wird. Vorzugsweise ist fest in dem Arbeitsbehälter das Auflager angeordnet, gegen den das Spannstück der Spannvorrichtung das Werkstück, beispielsweise die Nabe des Fahrzeugrads spannt. Von dem Auflager steht vorzugsweise der Schaft ab, der das Werkstück, beispielsweise das Mittelloch des Fahrzeugrads beim Spannen durchgreift und mit dem die Spannvorrichtung zum Spannen auf einer dem Auflager gegenüberliegenden Seite des Werkstücks, beispielsweise des Fahrzeugrads lösbar verbunden wird. Zum Gleitschleifen wird der Arbeitsbehälter rotierend und/oder oszillierend angetrieben, wobei in dem Arbeitsbehälter befindliche Schleifkörper (sogenannte "Chips") das in dem Arbeitsbehälter festgespannte Werkstück/Fahrzeugrad spanend bearbeiten, nämlich schleifen.

Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale des Anspruchs 1 verwirklicht sein. Auch können einzelne Merkmale des Anspruchs 1 durch andere offenbarte Merkmale oder Merkmalskombinationen ersetzt werden.

Weitere Vorteile, Merkmale und Einzelheiten der Erfindung ergeben sich aus den Ansprüchen, der nachfolgenden Beschreibung eines Ausführungsbeispiels sowie anhand der Zeichnungen, in welchen gleiche oder funktionsgleiche Elemente mit identischen Bezugszeichen versehen sind. Es zeigen:
- Figur 1: eine erfindungsgemäße Spannvorrichtung in perspektivischer Darstellung;
- Figur 2: eine Ansicht der Spannvorrichtung aus Figur 1;
- Figur 3: einen Achsschnitt der Spannvorrichtung aus Figuren 1 und 2; und
- Figur 4: eine teilweise schematisierte Achsschnittdarstellung einer Vorrichtung zum Gleitschleifen gemäß der Erfindung.

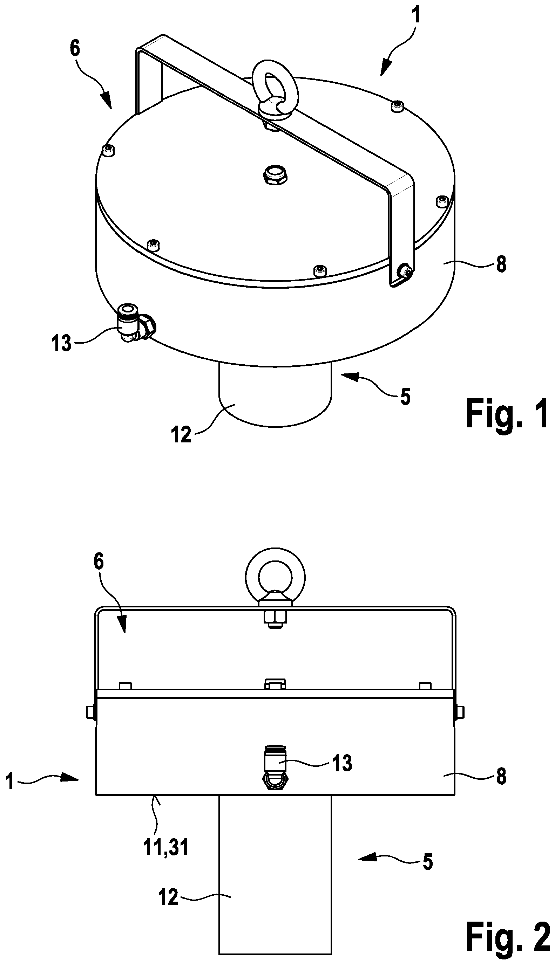

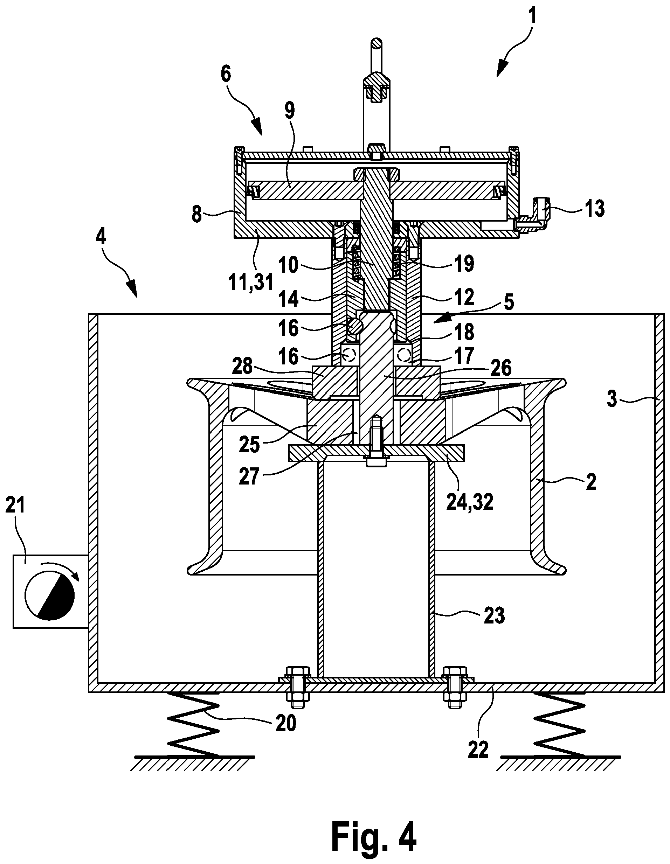

Die in Figuren 1 bis 3 dargestellte, erfindungsgemäße Spannvorrichtung 1 ist allgemein zum Spannen eines Werkstücks zu einer spanenden oder anderen Bearbeitung oder auch zu einem anderen Zweck vorgesehen. Insbesondere ist die Spannvorrichtung 1 zum Spannen eines ein Loch aufweisenden Werkstücks und speziell zum Spannen eines Fahrzeugrads 2 in einem Arbeitsbehälter 3 einer Vorrichtung 4 zum Gleitschleifen vorgesehen, was am Ende der Beschreibung anhand der Figur 4 erläutert werden wird.

Die Spannvorrichtung 1 weist eine Achse, eine Verbindungseinrichtung 5 und einen Aktuator 6 auf, der sowohl zu einer Betätigung der Verbindungseinrichtung 5 als auch zum Spannen des Werkstücks dient. Der Aktuator 6 ist eine antriebstechnische Baueinheit, die eine Bewegung erzeugt, mit der im Ausführungsbeispiel sowohl die Verbindungseinrichtung 5 betätigt als auch das Werkstück gespannt wird.

"Betätigen" bedeutet ein Schließen und/oder Öffnen der Verbindungseinrichtung 5, wobei "Schließen" bedeutet, dass die Verbindungseinrichtung 5 und mit der Verbindungseinrichtung 5 die Spannvorrichtung 1 mit einem Gegenspannstück beziehungsweise mit einem Schaft 26 verbunden wird. "Öffnen" bedeutet ein Lösen der Verbindungseinrichtung 5 und mit der Verbindungseinrichtung 5 der Spannvorrichtung 1 von dem Gegenspannstück beziehungsweise von dem Schaft 26.

Im Ausführungsbeispiel ist der Aktuator 6 druckmittelbetätigt, das heißt hydraulisch oder - im Ausführungsbeispiel - pneumatisch betätigt. Andere, beispielsweise elektromechanische oder elektromagnetische Aktuatoren sind ebenfalls möglich (nicht dargestellt).

Der Aktuator 6 weist einen Zylinder 8 und einen Kolben 9 auf, der axial in dem Zylinder 8 beweglich ist. Im Ausführungsbeispiel ist der Zylinder 8 flach, das heißt er ist axial kürzer als sein Durchmesser, im Ausführungsbeispiel ist der Zylinder 8 axial ungefähr halb so hoch wie sein Durchmesser. Der Kolben 9 weist im Ausführungsbeispiel eine Lochscheibe auf, die an einem Umfang druckdicht im Zylinder 8 abgedichtet ist und die eine Kolbenstange 10 aufweist, die mit dem Kolben 9 verschraubt oder in anderer Weise starr verbunden ist und koaxial von einer Seite des Kolbens 9 absteht.

Ein Zylinderboden 11 des Zylinders 8 weist ein Mittelloch und einen rohrförmigen und koaxialen Hohlschaft 12 auf, in den die Kolbenstange 10 ragt.

Der Zylinder 8 weist einen Druckluftanschluss 13 auf, der zwischen dem Kolben 9 und dem Zylinderboden 11 in den Zylinder 8 mündet.

Es sind andere Ausführungen des Aktuators 6 als die vorstehend beschriebene und in der Zeichnung dargestellte Ausführung möglich.

Mit der Kolbenstange 10 ist eine Hülse 14 starr verbunden, die mit dem Kolben 9 über die Kolbenstange 10 axial in dem Hohlschaft 12 des Zylinders 8 verschiebbar ist. An einem dem Zylinder 8 fernen Ende steht die Hülse 14 über die Kolbenstange 10 über und weist radiale Durchgangslöcher 15 in einem axial über die Kolbenstange 10 überstehenden Abschnitt der Hülse 14 auf. Die Durchgangslöcher 15 sind über einen Umfang verteilt in einer Radialebene der Hülse 14 angebracht. In den Durchgangslöchern 15 der Hülse 14 sind Kugeln radial beweglich angeordnet, die Riegel 16 der Verbindungseinrichtung 5 der erfindungsgemäßen Spannvorrichtung 1 bilden. Die Durchgangslöcher 15 verjüngen sich an einem Innenumfang der Hülse 14 auf einen kleineren Durchmesser als einem Durchmesser der Kugeln derart, dass die Kugeln nicht radial nach innen aus den Durchgangslöcher 15 austreten können. Radial außen sind die Kugeln von dem Hohlschaft 12 des Zylinders 8 umschlossen.

In einem axialen Abstand von seinem dem Zylinder 8 fernen Ende erweitert sich der Hohlschaft 12 des Zylinders 8 innen mit einer koaxialen, kegelstumpfförmigen Aufweitung, an die sich ein axial kurzer Hohlzylinderabschnitt 17 anschließt. Der Hohlzylinderabschnitt 17 in dem dem Zylinder 8 fernen Ende des Hohlschafts 12 ist im Ausführungsbeispiel wenig länger als der Durchmesser der Kugeln, die die Riegel 16 der Verbindungseinrichtung 5 bilden. Die Aufweitung beziehungsweise ihre hohlkegelstumpfförmige Fläche bildet eine Schrägfläche 18, die schräg in einem - im Ausführungsbeispiel spitzen - Winkel zu der Achse der Spannvorrichtung 1 verläuft. Im Ausführungsbeispiel ist die Schrägfläche 18 koaxial um die Achse umlaufend ausgebildet, es sind allerdings auch beispielsweise für jede der die Riegel 16 bildenden Kugeln eine eigene Schrägfläche möglich (nicht dargestellt).

Auf einer Außenseite des Zylinderbodens 11 ist eine Schraubendruckfeder als Federelement 19 auf der Kolbenstange 10 angeordnet, die sich an dem Zylinderboden 11 abstützt und die Hülse 14 von dem Zylinderboden 11 abdrückt. Über die Kolbenstange 10 beaufschlagt das Federelement 19 den Kolben 9 im Zylinder 8 in Richtung des Zylinderbodens 11.

Zum Schließen der Verbindungseinrichtung 5 wird der Zylinder 8 durch den Druckluftanschluss 13 mit Druckluft, einem anderen Druckgas oder auch einer Flüssigkeit beaufschlagt. Die Druckbeaufschlagung erfolgt im Zylinder 8 zwischen dem Kolben 9 und dem Zylinderboden 11, das heißt durch die Druckbeaufschlagung wird der Kolben 9 gegen eine Federkraft des Federelements 19 vom Zylinderboden 11 abgedrückt. Über die Kolbenstange 10 bewegt der Kolben 9 dabei die Hülse 14 achsparallel in Richtung des Zylinders 8. Die Hülse 14 bewegt die Kugeln in ihren radialen Durchgangslöcher 15, die die Riegel 16 der Verbindungseinrichtung 5 bilden, mit in Richtung des Zylinders 8. Dabei "überfahren" die die Riegel 16 bildenden Kugeln die hohlkegelstumpfförmige Schrägfläche 18 und werden von der Schrägfläche 18 radial nach innen gedrückt derart, dass sie um weniger als eine Hälfte ihres Durchmessers radial nach innen in die Hülse 14 vorstehen. Diese Verriegelungsstellung oder Schließstellung der Verbindungseinrichtung 5 mit dem durch Druckbeaufschlagung vom Zylinderboden 11 abgehobenen Zylinder 8 zeigt die Figur 2.

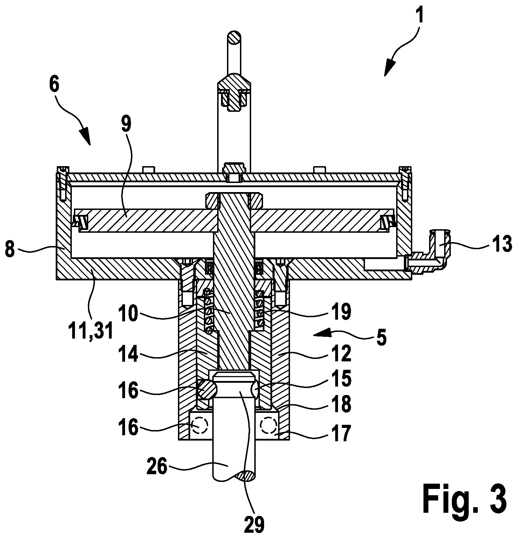

In einer offenen oder entriegelten Stellung ist der Zylinder 8 drucklos und das Federelement 19 beaufschlagt den Kolben 9 zum Zylinderboden 11 und bewegt über die Kolbenstange 10 die Hülse 14 weg vom Zylinder 8. Die die Riegel 16 bildenden Kugeln befinden sich in dieser nicht dargestellten Stellung in dem Hohlzylinderabschnitt 17 mit dem größeren Durchmesser in dem dem Zylinder 8 fernen Ende des Hohlschafts 12 derart, dass die die Riegel 16 bildenden Kugeln radial so weit nach außen bewegt werden können, dass sie nicht nach innen über einen Innenumfang der Hülse 14 überstehen. In Figur 3 sind die die Riegel 16 bildenden Kugeln mit Strichlinien auch in der radial nach außen bewegten, entriegelten Stellung dargestellt, in der die Kugeln an einem Innenumfang des Hohlzylinderabschnitts 17 des Hohlschafts 12 anliegen.

Wie oben geschrieben, dient die in Figuren 1 bis 3 dargestellte und vorstehend erläuterte, erfindungsgemäße Spannvorrichtung 1 zum Festspannen des Fahrzeugrads 2, das allgemein als Werkstück aufgefasst werden kann, in dem Arbeitsbehälter 3 der erfindungsgemäßen Vorrichtung 1 zum Gleitschleifen, die in Figur 4 dargestellt ist. Allerdings lässt sich die Spannvorrichtung 1 auch zu anderen Zwecken verwenden, beispielsweise zu einem Spannen des Fahrzeugrads 2 an einer nicht dargestellten Vorrichtung zu einem dynamischen Auswuchten des Fahrzeugrads 2 und allgemein zu einem Spannen eines Werkstücks zu dessen grundsätzlich beliebiger Bearbeitung oder zu einem anderen Zweck.

Die in Figur 4 dargestellte, erfindungsgemäße Vorrichtung 4 zum Gleitschleifen des Fahrzeugrads 2, das insbesondere ein Leichtmetallrad ist, oder auch zum Spannen eines anderen Werkstücks, weist die Vorrichtung 4 eine Trommel als Arbeitsbehälter 3 auf. Die den Arbeitsbehälter 3 bildende Trommel ist mit vertikaler Achse angeordnet und oben offen. Der Arbeitsbehälter 3 ist auf Federelementen 20 schwingfähig gelagert und weist einen oder mehrere Vibratoren 21 auf, die den Arbeitsbehälter 3 zum Gleitschleifen in Schwingungen versetzen. Der Vibrator 21 ist außen am Arbeitsbehälter 3 angebracht und als Symbol dargestellt.

In einer Mitte eines Bodens 22 weist der Arbeitsbehälter 3 einen rohrförmigen Ständer 23 auf, der starr und lösbar am Boden 22 angebracht, beispielsweise mit dem Boden 22 verschraubt ist. An einem oberen, dem Boden 22 fernen Ende ist - im Ausführungsbeispiel eine Lochscheibe - als Auflager 24 für das Fahrzeugrad 2 angebracht ist. Das Auflager 24 ist derart in dem Arbeitsbehälter 3 der Vorrichtung 1 zum Gleitschleifen angeordnet, dass sich das Fahrzeugrad 2 vollständig innerhalb des Arbeitsbehälters 3 befindet, wenn eine Nabe 25 des Fahrzeugrads 2 auf dem Auflager 24 aufliegt. Nicht dargestellte Schleifkörper zum Gleitschleifen können so hoch in den Arbeitsbehälter 3 gefüllt werden, dass sie das Fahrzeugrad 2 oder allgemein das Werkstück vollständig bedecken. Zusätzlich zu den Schleifkörpern kann der Arbeitsbehälter 3 eine Flüssigkeit enthalten.

Mit der das Auflager 24 bildenden Lochscheibe ist ein Schaft 26 verschraubt, der im Ausführungsbeispiel die Form einer Zylinderstange aufweist und rechtwinklig von dem Auflager 24 absteht. Der Schaft 26 kann losgeschraubt und dadurch gewechselt werden gegen beispielsweise einen längeren oder kürzeren Schaft 26 und/oder gegen einen Schaft 26 mit anderem Durchmesser bzw. anderem Querschnitt.

Zum Festspannen in dem Arbeitsbehälter 3 wird das das Werkstück bildende Fahrzeugrad 2 mit seiner Nabe 25 derart auf dem Auflager 24 angeordnet, dass der von dem Auflager 24 abstehende Schaft 26 ein Mittelloch 27 in der Nabe 25 des Fahrzeugrads 2 durchgreift. Anschließend wird ein Adapterring 28 auf den Schaft 26 aufgesetzt und auf der Nabe 25 des Fahrzeugrads 2 angeordnet. Der Adapterring 28 zentriert das Fahrzeugrad 2 auf dem Schaft 26.

Nach dem Fahrzeugrad 2 und dem Adapterring 28 wird die erfindungsgemäße Spannvorrichtung 1 auf den Schaft 26 und auf das Fahrzeugrad 2 aufgesetzt. Und zwar wird die Spannvorrichtung 1 mit ihrem Hohlschaft 12 auf den Schaft 26 aufgesetzt, der von dem Auflager 24 im Arbeitsbehälter 3 absteht. Die Hülse 14 gelangt dabei über ein dem Auflager 24 fernes Ende Schafts 26. Der Schaft 26 weist eine umlaufende Nut 29 nahe seinem in der Hülse 14 befindlichen Ende auf, wobei sich die die Riegel 16 bildenden Kugeln in einer Radialebene der Nut 29 befinden, die einen mit dem Durchmesser der Kugeln gerundeten Querschnitt aufweist.

Durch Druckbeaufschlagung des Zylinder 8 durch den Druckluftanschluss 13 wird die Hülse 14 in dem Hohlschaft 12 des Zylinders 8 in Richtung des Zylinderbodens 11 bewegt. Dabei werden die die Riegel 16 bildenden Kugeln von der Schrägfläche 18 radial nach innen gedrückt derart, dass Sie in die umlaufende Nut 29 des Schafts 26 greifen. Die Verbindungseinrichtung 5 ist geschlossen, die die Riegel 16 bildenden Kugeln, die in die Nut 29 des Schafts 26 greifen, verbinden die Spannvorrichtung 1 durch Formschluss in der Nut 29 mit dem Schaft 26.

Die Druckbeaufschlagung des Kolbens 9 im Zylinder 8 durch den Druckluftanschluss 13 drückt den Kolben 9 von dem Zylinderboden 11 ab und beaufschlagt über die Kolbenstange 10 und deren formschlüssige Verbindung mit dem Schaft 26 den Zylinder 8 axial in Richtung des Auflagers 24. Dadurch wird das Fahrzeugrad 2 mit seiner Nabe 25 zwischen dem Zylinder 8 und dem Auflager 24 festgespannt. Dabei bildet der Zylinderboden 11 ein Spannstück 31 und das Auflager 24 ein Gegenspannstück 32, die über die geschlossene Verbindungseinrichtung 5 der erfindungsgemäßen Spannvorrichtung 1 lösbar miteinander verbunden sind. Eine Spannrichtung der Spannvorrichtung 1 entspricht der Achsrichtung.

Der den Zylinder 8 und den Kolben 9 aufweisende - im Ausführungsbeispiel pneumatische - Aktuator 6 schließt sowohl die Verbindungseinrichtung 5, das heißt verbindet sowohl die Spannvorrichtung 1 mit dem Schaft 26 im Arbeitsbehälter 3 als auch spannt der Aktuator 6 die Nabe 25 des Fahrzeugrads 2 zwischen dem Zylinderboden 11 als Spannstück 31 und dem Auflager 24 als Gegenspannstück 32 fest.

Zum Öffnen der Verbindungseinrichtung 5 und Lösen der Spannvorrichtung 1 von dem Schaft 26 im Arbeitsbehälter 3 wird der Druck im Zylinder 8 abgelassen, so dass bei drucklosem Zylinder 8 das Federelement 19 die Verbindungseinrichtung 5 löst. Die Spannvorrichtung 1 kann von dem Schaft 26 abgenommen und das Fahrzeugrad 2 aus dem Arbeitsbehälter 3 entnommen werden.

## Patentansprüche

1. Spannvorrichtung (1) zum Spannen eines Werkstücks, mit einem Spannstück (31) zum Spannen des Werkstücks, mit einer lösbaren Verbindungseinrichtung (5) zu einem lösbaren Verbinden der Spannvorrichtung (1) mit einem Gegenspannstück (32), und mit einem Aktuator (6) zu einer Betätigung der Verbindungseinrichtung (5), **dadurch gekennzeichnet, dass** der Aktuator (6) bei einem Schließen der Verbindungseinrichtung (5) das Spannstück () in einer Spannrichtung in Bezug zu der Verbindungseinrichtung (5) beaufschlagt.

2. Spannvorrichtung nach Anspruch 1, **dadurch gekennzeichnet, dass** die Spannvorrichtung (1) einen Schaft (26) aufweist, mit dem das Spannstück (31) mit Hilfe der Verbindungseinrichtung (5) lösbar verbindbar ist, und dass der Aktuator (6) das Spannstück (31) beim Schließen der Verbindungseinrichtung (5) in einer Längsrichtung des Schafts (26) als Spannrichtung beaufschlagt.

3. Spannvorrichtung nach Anspruch 2, **dadurch gekennzeichnet, dass** die Spannvorrichtung (1) ein Auflager (24) als Gegenspannstück (32) aufweist, von dem der Schaft (26) absteht.

4. Spannvorrichtung nach einem oder mehreren der Ansprüche 1 bis 3, **dadurch gekennzeichnet, dass** die Spannvorrichtung (1) einen druckmittelbetätigbaren, insbesondere pneumatischen Aktuator (6) aufweist.

5. Spannvorrichtung nach Anspruch 4, **dadurch gekennzeichnet, dass** der Aktuator (6) die Verbindungseinrichtung (5) durch Druckbeaufschlagung des Aktuators (6) schließt und federbetätigt öffnet.

6. Spannvorrichtung nach Anspruch 4 oder 5, **dadurch gekennzeichnet, dass** der Aktuator (6) einen Zylinder (8) und einen axial in dem Zylinder (8) beweglichen Kolben (9) aufweist.

7. Spannvorrichtung nach einem der vorhergehenden Ansprüche, **dadurch gekennzeichnet, dass** die Verbindungseinrichtung (5) eine schräg zu der Spannrichtung verlaufende Schrägfläche (18) und einen Riegel (16) zum Verbinden der Spannvorrichtung (1) mit dem Gegenspannstück (32) aufweist, der zum Schließen der Verbindungseinrichtung (5) quer zu der Spannrichtung beweglich ist, und dass zum Schließen der Verbindungseinrichtung (5) der Aktuator (6) die Schrägfläche (18) in Bezug zu dem Riegel (16) derart bewegt, dass die Schrägfläche (18) den Riegel (16) quer zu der Spannrichtung bewegt.

8. Spannvorrichtung nach einem oder mehreren der vorhergehenden Ansprüche, **dadurch gekennzeichnet, dass** die Verbindungseinrichtung (5) Kugeln und eine Kegelfläche aufweist, die zum Schließen der Verbindungseinrichtung (5) von dem Aktuator (6) in Richtung ihrer Achse bewegt wird, wodurch die Kugeln von der Kegelfläche radial zu ihrer Achse bewegt werden.

9. Spannvorrichtung nach Anspruch 2 und 8, **dadurch gekennzeichnet, dass** der Schaft (26) eine umlaufende Hinterschneidung und die Verbindungseinrichtung (5) eine Innenkegelfläche als Kegelfläche aufweist, die beim Schließen der Verbindungseinrichtung (5) die Kugeln radial nach innen in Hintergriff an der Hinterschneidung des Schafts (26) bewegt.

10. Vorrichtung zum Gleitschleifen, mit einem Arbeitsbehälter (3), in dem eine Spannvorrichtung (1) nach einem oder mehreren der vorhergehenden Ansprüche angeordnet ist.
